# EUROPEAN PATENT SPECIFICATION

(11) **EP 1 181 605 B1**
(45) Date of publication and mention of the grant of the patent: **16.04.2003**
(21) Application number: 00929710.2
(22) Date of filing: 15.05.2000
(51) Int. Cl.: G02B 6/44

(54) **CABLE TERMINATION**
KABELENDSTÜCK
TERMINAISON DE CABLE

(30) Priority: 19.05.1999 GB 9911612; 28.04.2000 GB 0010283
(43) Date of publication of application: 27.02.2002
(73) Proprietor: Tyco Electronics Raychem NV, 3010 Kessel-lo (BE)
(72) Inventor: KALMES, Philippe, B-3500 Hasselt (BE); VAN NOTEN, Lodewijk, B-3000 Leuven (BE); KEMPENEERS, Dirk, B-3200 Aarschot (BE); MENDES, Luis, Neves, B-3130 Begijnendijk (BE); SCHURMANS, Erik, B-3450 Hogen-Geetbets (BE)
(74) Representative: Beitsma, Gerhard Romano
(86) International application number: GB0001863
(87) International publication number: WO00072072

(56) References cited:
- WO-A-91/12548
- WO-A-94/24598
- WO-A-95/22071
- DE-A- 19 820 027
- US-A- 4 795 230

## Description

The present invention relates to a cable termination. More in particular, the present invention relates to a cable termination for an optical fibre cable having at least one non-coaxial strength member, the cable termination comprising a base member and an engagement member for engaging the strength member of the cable.

A cable termination serves to mechanically stabilise the end of a cable while organising and protecting the optical fibres emerging from the cable core.

Several types of cable terminations are known. WO 91/12548, for example, discloses a cable termination for use with a slotted core optical fibre cables having a central strength member. In this type of cable, the optical fibres are accommodated in slots or grooves in the circumference of the core, while the strength member (for example a metal wire) is coaxially arranged in the centre of the core. Another example of a termination for this type of cable is disclosed in US 4,795,230.

In central core cables the optical fibres are arranged in the centre of the core, while the one or more strength members are arranged at the outside of the core, that is, in a position which is spaced apart from the centre or, in other words, non-coaxial. This type of cable is often provided with two substantially diametrically opposed strength members.

When terminating a central core cable the problem often arises that the strength members are not aligned with the one or more engagement members in which the strength members are to be accommodated. It is then necessary to twist the cable to achieve a proper alignment. However, it has been found that this twisting results in undesirable torsion forces being exerted possibly leading to a bending of the cable termination or even a breaking of the strength members. In addition, the installation of a cable in a termination is relatively difficult to achieve when torsion has to be applied.

It is therefore an object of the present invention to eliminate the disadvantages of the Prior Art and to provide a cable termination for central core optical fibre cables which eliminates the need for twisting the cable and which is easy to install.

It is another object of the present invention to provide a cable termination for central core optical fibre cables which allows cables of various dimensions to be terminated.

To meet these and other objects a cable termination as defined in the preamble is according to the present invention characterised in that the engagement member is rotatably mounted on the base member so as to allow rotation about the longitudinal axis of the cable.

By providing an engagement member which can be rotated about the longitudinal axis of the cable over a certain angle it is no longer necessary to twist or rotate the cable to obtain alignment of the strength members and the engagement member, as the latter can simply be rotated into the desired position. In this way, any torsion is avoided and the installation is greatly facilitated.

The rotation can be achieved by providing, for example, a single slot in the base member, the slot extending transverse to the base member's longitudinal direction (here assumed to coincide with the cable's and the termination's longitudinal direction), and the engagement member having a single protrusion accommodated in the slot. Alternatively, the base member could be provided with one or more protrusions which are accommodated in slots in the engagement member. Preferably, however, the base member is provided with at least two transverse slots for accommodating protrusions extending from the engagement member. By providing two slots, advantageously spaced apart the termination's longitudinal direction, an undesired tilting of the engagement member is prevented. This tilting would increase friction and consequently make any rotation difficult.

In a preferred embodiment, at least one of the protrusions is constituted by a screw allowing the limiting member to be fixed. This allows the engagement member to be fixed at a certain angle. The engagement member can thus freely rotate to achieve the necessary alignment and is subsequently fixed in the aligned position to provide mechanical stability. Advantageously, the allowed rotation is a rotation over a minimum of approximately 45° and a maximum of approximately 180°.

It has been found that strength members may break or tear when put under lateral pressure, especially when the strength members are made of relatively brittle materials, such as glass or epoxy. It has also been found that once installed, strength members are more likely to be pushed towards the termination than to be pulled away from the termination. For these reasons, in a cable termination of the present invention the engagement member merely limits the longitudinal extension of the at least one strength member. The engagement member can thus be provided with "pockets" which are open at the side of the engagement member facing the cable so a strength member can be inserted, while the closed end of the pocket prevents the strength member from extending beyond the engagement member. It will be understood that in such an embodiment the strength members are only loosely "engaged", but that in other embodiments the strength members may be securely fixed in the engagement members, for example by clamping.

A variety of cable diameters can be accommodated in the cable termination of the present invention when the engagement member is provided with openings for accommodating strength members, the substantially longitudinal cross-sections of the openings being arranged in a substantially V-shaped configuration.

To accommodate a cable loop or the like a particular embodiment is designed such that the base member is arranged for accommodating two parallel optical fibre cables and comprises two engagement members in parallel.

Advantageously, a break-out member is mounted on the base member. The break-out member serves to organise the optical fibres emerging from the cable core.

A particular advantageous embodiment of a break-out member for use in a cable termination as defined above or in other types of cable terminations comprises a pair of mutually connected break-out blocks separated by a slot, each block comprising a plurality of through-holes for accommodating optical fibres. Preferably, the break-out member comprises a pair of mutually connected break-out blocks separated by a slot, each block comprising a plurality of through-holes.

The present invention further provides a kit-of-parts for providing a cable termination.

The present invention will further be explained below with reference to exemplary embodiments illustrated in the accompanying drawings, in which:
Figure 1 shows, in perspective, a first embodiment of the cable termination of the present invention;
Figures 2 and 3 show, in side view, the embodiment of Fig. 1;
Figure 4 shows, in perspective, a second embodiment of a cable termination of the present invention;
Figure 5 shows, in perspective, a break-out member for use in the embodiment of Fig. 4.

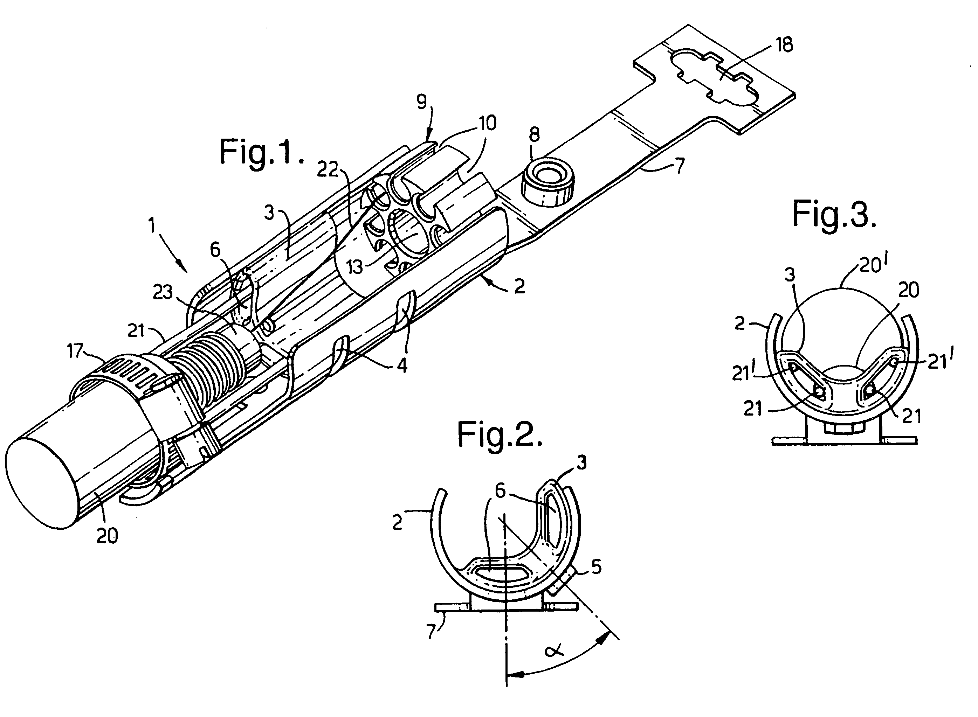

The cable termination 1 shown merely by way of example in Fig. 1 comprises a base member 2, an engagement member 3, a break-out member or organiser 9, a fixation tongue 7 and a cable clamp 17. An optical fibre cable 20 having strength members 21, optical fibres 22 and a core 23 is accommodated in the termination 1.

The longitudinal base member 2 has a partial circular circumference. The substantially tubular shape allows a partial rotation of the engagement member 3 and facilitates the accommodation of the substantially round break-out member 9. Two transverse slots 4 in the wall of the base member 2 each accommodate a protrusion (5 in Fig. 2) of the engagement member 3. This arrangement allows a partial rotation of the engagement member 3 relative to the basement 2 while preventing any longitudinal motion. The use of two pairs of slots and protrusions, spaced apart in the longitudinal direction, provides additional stability.

In the embodiment shown, the engagement member 3 is provided with two openings 6 for accommodating a strength member 21 each. These openings 6 are closed off at the other end of the engagement member 3 so as to limit the extension of the strength members 21. The strength members 21 are preferably not attached to the engagement members 3 so as to minimise the risk of breaking, thus allowing lateral movement of the strength members 21 due to the cross-sectional shape of the openings 6.

A longitudinally extending fixation tongue 7 is integral with the base member 2 and is provided with a fixation opening 18 for accommodating a screw or the like. A connecting member 8 allows an optional strength member connector (not shown) to be mounted for fixedly attaching strength members 21 to the termination 1 if this should be required. The size and shape of the tongue 7 may depend on the particular application of the cable termination 1.

The engagement member 3 shown in Fig. 2 is rotated over an angle α of approximately 45°. A protrusion 5, here shown to be a screw, protrudes through a slot 4 (see Fig. 1) in the base member 2 and defines the range of rotation.

The engagement member 3 is shown to have two openings 6, each having a substantially longitudinal cross-section. As further illustrated in Fig. 3, the substantially V-shaped arrangement of the openings 6 allows a wide range of cables to be accommodated. A cable 20 having a relatively small diameter has strength members 21 which are accommodated in the openings 6, while a cable 20 having a relatively large diameter has strength members 21' which are accommodated in the far corners of the same openings 6. Although it would be possible to provide a row of openings to accommodate the strength members of cables having various dimensions, the arrangement of Fig. 3 has the advantage of increased flexibility. Therefore only one opening 6 is provided for each strength member, the size and shape of the opening being chosen so as to be able to accommodate the strength member independent from the cable diameter. The engagement member 3 shown has a generally U-shaped cross-section which leaves the centre part of the termination free for the passage of optical fibres.

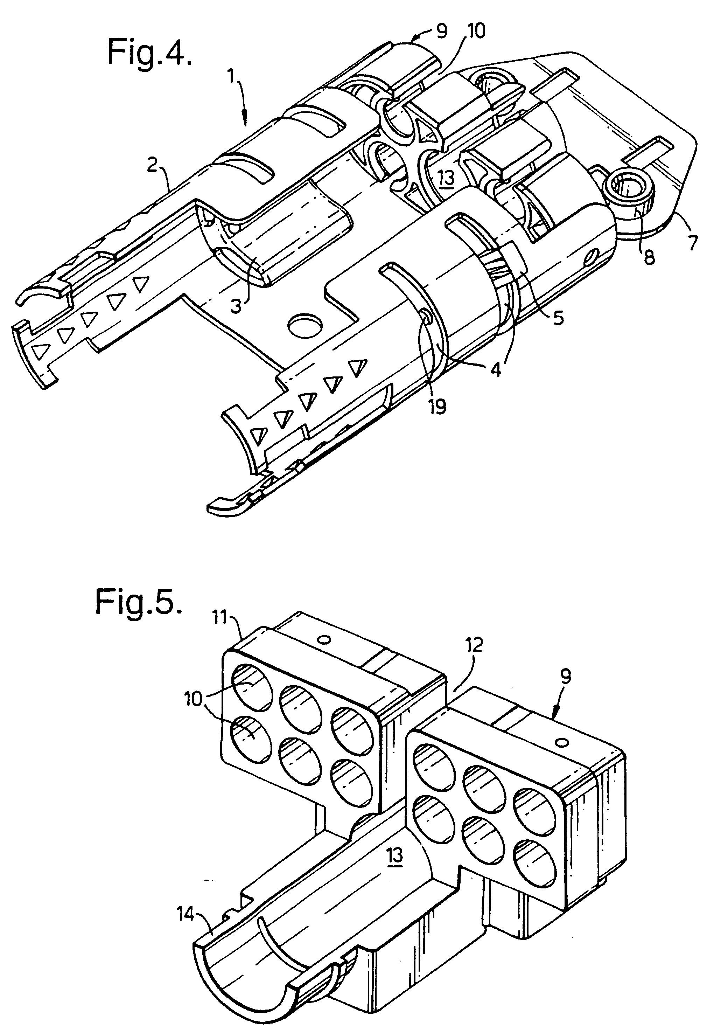

The embodiment of Fig. 4 is designed for accommodating parallel cables, in particular cable loops. The cable termination 1 has a base member 2 which accommodates two engagement members 3, each being rotatable about their respective longitudinal axes. Two sets of slots 4 define the allowed rotation in conjunction with protrusions 5. In the embodiment shown, each engagement member is provided with one integral protrusion 5 and one screw hole 19 for accommodating a fixing screw which serves as a second protrusion.

An elongated or substantially oval break-out member 9 is accommodated in the base member 2 and may be fastened by means of screws (not shown). The break-out member 9 of Fig. 4 has through-holes 10 which are open towards the perimeter of the member 9. This allows a "wrap-around" insertion of optical fibre into the holes 10 and thereby permits uncut fibres to be accommodated. An enlarged central through-hole 13 may be used for organising cut fibres.

The break-out member 9 shown in Fig. 5 may be substituted for the one shown in Fig. 4 when a higher degree of organisation is required. This break-out member 9 has two parts or blocks 11 which are mutually connected at the bottom end of the member 9 but are separated at the top end by a slot 12. Each block 11 has, in the embodiment shown, six through-holes 10 for accommodating (cut) optical fibres. The slot 12, which at its lower end is provided with a widened portion or central through-hole 13, serves to provide access to the central through-hole in a "wrap-around" fashion. This allows uncut fibres to be accommodated in the central through-hole 13 and the fibre guide 14 extending from the through-hole 13.

The break-out member 9 of Fig. 5 therefore allows a high degree of organisation by being able to accommodate both cut and uncut fibres and by being able to separate the cut fibres into two distinct groups. The member is particularly suitable for loop terminations where part of the fibres is looped back and part is spliced to further fibres.

This break-out member 9 may be mounted on the tongue 7 by means of screws (not shown) which are received in screw-threaded connecting members 8. The member is suitably mounted with the main part of the fibre guide 14 pointing away from the engagement member 3. Holding tubes (not shown) for holding optical fibres may be inserted in the through-holes 10.

It will be understood that the number of six through-holes 10 per block 11 is merely given by way of example and that other numbers are also possible, such as, for example, four, five, seven, eight or ten.

The break-out 9 shown in Figs. 4 and 5 can also be used in cable terminations not having rotatable (or generally movable) engagement members.

It will be understood by those skilled in the art that the present invention is not limited to the embodiments shown and that many additions and modifications are possible without departing from the scope of the present invention as defined in the appending claims.

## Claims

1. Cable termination (1) for an optical fibre cable (20) having at least one non-coaxial strength member (21), the cable termination (1) comprising a base member (2) and an engagement member (3) for engaging the strength member (21) of the cable (20),
**characterised in that**
the engagement member (3) is rotatably mounted on the base member (2) so as to allow rotation about the longitudinal axis of the cable (20).

2. Cable termination according to claim 1, wherein the base member (2) is provided with at least two transverse slots (4) for accommodating protrusions (5) extending from the engagement member (3).

3. Cable termination according to claim 2, wherein at least one of the protrusions (5) is constituted by a screw allowing the engagement member (3) to be fixed.

4. Cable termination according to any of the preceding claims, wherein the allowed rotation is a rotation over a minimum of approximately 45° and a maximum of approximately 180°.

5. Cable termination according to any of the preceding claims, wherein the engagement member (3) is arranged for engaging two strength members (21).

6. Cable termination according to any of the preceding claims, wherein the engagement member (3) merely limits the longitudinal extension of the at least one strength member (21).

7. Cable termination according to any of the preceding claims, wherein the engagement member (3) is provided with openings (6) for accommodating strength members (21), the substantially longitudinal cross-sections of the openings (6) being arranged in a substantially V-shaped configuration.

8. Cable termination according to any of the preceding claims, wherein the base member (2) is provided with a fixation tongue (7) extending in the longitudinal direction.

9. Cable termination according to any of the preceding claims, wherein the base member (2) is provided with a cable jacket clamp (17).

10. Cable termination according to any of the preceding claims, wherein the base member (2) is arranged for accommodating two parallel optical fibre cables (20) and comprises two engagement members (3) in parallel.

11. Cable termination according to any of the preceding claims, wherein a break-out member (9) is mounted on the base member (2), the break-out member (9) comprising a plurality of through-holes (10) for accommodating optical fibres (22).

12. Cable termination according to claim 11, wherein the through-holes (10) are concentrically arranged.

13. Cable termination according to claim 11 or 12, wherein the break-out member (9) comprises a pair of mutually connected break-out blocks (11) separated by a slot (12), each block (11) comprising a plurality of through-holes (10).

14. Cable termination according to claim 11, wherein each block (11) comprises six through-holes (10).

15. Cable termination according to claims 13 or 14, wherein the slot (12) is provided with a substantially tubular widened end (13) for accommodating optical fibres.

16. Cable termination according to any one of the preceding claims, further provided with a housing.

17. Kit-of-parts for forming a cable termination (1) for an optical fibre cable (20) having at least one non-coaxial strength member (21), the kit-of-parts comprising a base member (2) and an engagement member (3) for engaging the strength member (21) of the cable (20),
**characterised in that** the engagement member (3) is rotatably mountable on the base member (2) so as to allow rotation about the longitudinal axis of the cable (20).

## Patentansprüche

1. Kabelabschluß (1) für ein Lichtleiterkabel (20), das mindestes ein nicht koaxiales Festigkeitselement (21) aufweist, wobei der Kabelabschluß (1) ein Basiselement (2) und ein Eingriffselement (3) zum Eingriff mit dem Festigkeitselement (21) des Kabels (20) aufweist,
**dadurch gekennzeichnet,**
**daß** das Eingriffselement (3) an dem Basiselement (2) drehbar angebracht ist, so daß eine Rotation um die Längsachse des Kabels (20) möglich ist.

2. Kabelabschluß nach Anspruch 1,
wobei das Basiselement (2) mit mindestens zwei Querschlitzen (4) versehen ist, um Vorsprünge (5) aufzunehmen, die sich von dem Eingriffselement (3) weg erstrecken.

3. Kabelabschluß nach Anspruch 2,
wobei mindestens einer der Vorsprünge (5) durch eine Schraube gebildet ist, die ein Festlegen des Eingriffselements (3) ermöglicht.

4. Kabelabschluß nach einem der vorausgehenden Ansprüche,
wobei die zulässige Rotation eine Rotation über ein Minimum von etwa 45° und ein Maximum von etwa 180° ist.

5. Kabelabschluß nach einem der vorausgehenden Ansprüche,
wobei das Eingriffselement (3) zum Eingriff mit zwei Festigkeitselementen (21) ausgebildet ist.

6. Kabelabschluß nach einem der vorausgehenden Ansprüche,
wobei das Eingriffselement (3) lediglich die Längserstreckung des mindestens einen Festigkeitselements (21) begrenzt.

7. Kabelabschluß nach einem der vorausgehenden Ansprüche,
wobei das Eingriffselement (3) mit Öffnungen (6) zum Aufnehmen von Festigkeitselementen (21) ausgebildet ist, wobei die im wesentlichen länglichen Querschnitte der Öffnungen (6) in einer im wesentlichen V-förmigen Konfiguration angeordnet sind.

8. Kabelabschluß nach einem der vorausgehenden Ansprüche,
wobei das Basiselement (2) mit einer sich in Längsrichtung erstreckenden Fixierungszunge (7) versehen ist.

9. Kabelabschluß nach einem der vorausgehenden Ansprüche,
wobei das Basiselement (2) mit einer Kabelmantelklemme (17) versehen ist.

10. Kabelabschluß nach einem der vorausgehenden Ansprüche,
wobei das Basiselement (2) für die Unterbringung von zwei parallelen Lichtleiterkabeln (20) ausgebildet ist und zwei Eingriffselemente (3) parallel aufweist.

11. Kabelabschluß nach einem der vorausgehenden Ansprüche,
wobei ein Aufteilungselement (9) an dem Basiselement (2) angebracht ist,
wobei das Aufteilungselement (9) eine Vielzahl von Durchgangsöffnungen (10) für die Aufnahme von Lichtleitern (22) aufweist.

12. Kabelabschluß nach Anspruch 11,
wobei die Durchgangsöffnungen (10) konzentrisch angeordnet sind.

13. Kabelabschluß nach Anspruch 11 oder 12,
wobei das Aufteilungselement (9) ein Paar von miteinander verbundenen Aufteilungsblöcken (11) aufweist, die durch einen Schlitz (12) getrennt sind, wobei jeder Block (11) eine Vielzahl von Durchgangsöffnungen (10) aufweist.

14. Kabelabschluß nach Anspruch 11,
wobei jeder Block (11) sechs Durchgangsöffnungen (10) aufweist.

15. Kabelabschluß nach Anspruch 13 oder 14,
wobei der Schlitz (12) mit einem im wesentlichen rohrförmig erweiterten Ende (13) zum Aufnehmen von Lichtleitern versehen ist.

16. Kabelabschluß nach einem der vorausgehenden Ansprüche,
der weiterhin mit einem Gehäuse versehen ist.

17. Bauteilesatz zum Bilden eines Kabelabschtusses (1) für ein Lichtleiterkabel (20), das mindestes ein nicht koaxiales Festigkeitselement (21) aufweist, wobei der Bauteilesatz ein Basiselement (2) und ein Eingriffselement (3) zum Eingriff mit dem Festigkeitselement (21) des Kabels (20) aufweist,
**dadurch gekennzeichnet,**
**daß** das Eingriffselement (3) an dem Basiselement (2) drehbar angebracht ist, so daß eine Rotation um die Längsachse des Kabels (20) möglich ist.

## Revendications

1. Terminaison (1) de câble pour un câble (20) à fibres optiques ayant au moins un élément de renfort non coaxial (21), la terminaison (1) de câble comportant un élément de base (2) et un élément d'engagement (3) destiné à engager l'élément de renfort (21) du câble (20),
**caractérisée en ce que**
l'élément d'engagement (3) est monté de façon tournante sur l'élément de base (2) afin de pouvoir effectuer une rotation autour de l'axe longitudinal du câble (20).

2. Terminaison de câble selon la revendication 1, dans laquelle l'élément de base (2) est pourvu d'au moins deux fentes transversales (4) destinées à loger des saillies (5) s'étendant depuis l'élément d'engagement (3).

3. Terminaison de câble selon la revendication 2, dans laquelle au moins l'une des saillies (5) est constituée par une vis permettant de fixer l'élément d'engagement (3).

4. Terminaison de câble selon l'une quelconque des revendications précédentes, dans laquelle la rotation permise est une rotation sur un minimum d'environ 45° et un maximum d'environ 180°.

5. Terminaison de câble selon l'une quelconque des revendications précédentes, dans laquelle l'élément d'engagement (3) est agencé de façon à engager deux éléments de renfort (21).

6. Terminaison de câble selon l'une quelconque des revendications précédentes, dans laquelle l'élément d'engagement (3) limite simplement l'extension longitudinale du, au moins un, élément de renfort (21).

7. Terminaison de câble selon l'une quelconque des revendications précédentes, dans laquelle l'élément d'engagement (3) est pourvu d'ouvertures (6) destinées à loger des éléments de renfort (21), les sections sensiblement longitudinales des ouvertures (6) étant agencées en une configuration sensiblement en forme de V.

8. Terminaison de câble selon l'une quelconque des revendications précédentes, dans laquelle l'élément de base (2) est pourvu d'une languette (7) de fixation s'étendant dans la direction longitudinale.

9. Terminaison de câble selon l'une quelconque des revendications précédentes, dans laquelle l'élément de base (2) est pourvu d'un collier (17) de serrage de gaine de câble.

10. Terminaison de câble selon l'une quelconque des revendications précédentes, dans laquelle l'élément de base (2) est agencé de façon à loger deux câbles parallèles (20) à fibres optiques et comporte deux éléments d'engagement (3) en parallèle.

11. Terminaison de câble selon l'une quelconque des revendications précédentes, dans laquelle un élément de sortie (9) est monté sur l'élément de base (2), l'élément de sortie (9) comportant plusieurs trous traversants (10) destinés à loger des fibres optiques (22).

12. Terminaison de câble selon la revendication 11, dans laquelle les trous traversants (10) sont agencés concentriquement.

13. Terminaison de câble selon la revendication 11 ou 12, dans laquelle l'élément de sortie (9) comporte deux blocs de sortie (11) reliés entre eux, séparés par une fente (12), chaque bloc (11) comportant plusieurs trous traversants (10).

14. Terminaison de câble selon la revendication 11, dans laquelle chaque bloc (11) comporte six trous traversants (10).

15. Terminaison de câble selon la revendication 13 ou 14, dans laquelle la fente (12) est pourvue d'une extrémité élargie sensiblement tubulaire (13) pour loger des fibres optiques.

16. Terminaison de câble selon l'une quelconque des revendications précédentes, comportant en outre un boîtier.

17. Ensemble de pièces pour former une terminaison (1) de câble pour un câble (20) à fibres optiques ayant au moins un élément non coaxial (21) de renfort, l'ensemble de pièces comportant un élément de base (2) et un élément d'engagement (3) destiné à engager l'élément de renfort (21) du câble (20),
**caractérisé en ce que** l'élément d'engagement (3) peut être monté de façon tournante sur l'élément de base (2) afin de pouvoir effectuer une rotation autour de l'axe longitudinal du câble (20).
